# EUROPEAN PATENT APPLICATION

(11) **EP 4 266 529 A1**
(43) Date of publication of application: **25.10.2023**
(21) Application number: 21906520.8
(22) Date of filing: 10.12.2021
(51) Int. Cl.: H02J 7/00, H02J 7/34, H02J 3/32, H02J 3/38, H01M 10/44

(54) **POWER SUPPLY SYSTEM AND POWER SUPPLY UNIT**

(30) Priority: 18.12.2020 JP 2020209798
(71) Applicant: NTN Corporation, Osaka-shi, Osaka 550-0003 (JP)
(72) Inventor: ONO, Kouhei, Kuwana-shi, Mie 511-0867 (JP)
(74) Representative: Brüntjen, Thorsten
(86) International application number: PCT/JP2021/045540
(87) International publication number: WO 2022/131158

(57) **Abstract**

A power supply system and a power supply unit each including a power storage in which electric power of a large capacity can be accumulated while mobility thereof is ensured are provided. A power supply system (500) includes a power supply unit (2001) and a power supply unit (2002). The power supply unit (2001) includes a power generation apparatus (151) that generates electric power and a battery (161) in which electric power generated by the power generation apparatus (151) is stored. The power supply unit (2002) includes a power generation apparatus (152) that generates electric power and a battery (162) where electric power generated by the power generation apparatus (152) is stored. The battery (161) and the battery (162) are removably connected such that electric power stored in the battery (161) can be supplied to the battery (162).

## Description

### TECHNICAL FIELD

This invention relates to a power supply system and a power supply unit.

### BACKGROUND ART

For example, Japanese Patent No. 4840030 (PTL 1) discloses a power supply system including a power generation apparatus that generates electric power and a power storage in which electric power generated by the power generation apparatus is stored. A generation apparatus is, for example, a wind power generation apparatus or a photovoltaic power generation apparatus.

### CITATION LIST

### PATENT LITERATURE

PTL 1: Japanese Patent No. 4840030

### SUMMARY OF INVENTION

### TECHNICAL PROBLEM

A user or the like of the power supply system described in PTL 1 may desire increase in power storage capacity of the power storage. In this case, the power storage should be increased in size. The user or the like may desire removal of the power storage where electric power is stored from the power supply system and transport of the power storage. Transport of a charging apparatus large in size is difficult for the user. In other words, mobility of the charging apparatus may be compromised.

This invention was made to solve problems as above, and provides a power supply system and a power supply unit each including a power storage in which electric power of a large capacity can be stored while mobility thereof is ensured.

### SOLUTION TO PROBLEM

According to one aspect of the present disclosure, a power supply system includes a first power supply unit and a second power supply unit. The first power supply unit includes a first obtaining apparatus that obtains electric power and a first power storage in which electric power obtained by the first obtaining apparatus is stored. The second power supply unit includes a second obtaining apparatus that obtains electric power and a second power storage where electric power obtained by the second obtaining apparatus is stored. The first power storage and the second power storage are removably connected such that electric power stored in the first power storage can be supplied to the second power storage.

According to another aspect of the present disclosure, a power supply unit includes an obtaining apparatus that obtains electric power and a power storage in which electric power obtained by the first obtaining apparatus is stored. The power storage and a power storage of another power supply unit are removably connected such that electric power stored in the power storage can be supplied to the power storage of another power supply unit.

### ADVANTAGEOUS EFFECTS OF INVENTION

According to the present invention, in the power supply system, electric power stored in the first power storage of the first power supply unit can be supplied to the second power storage. Therefore, since electric power obtained by the first obtaining apparatus can be stored in the first power storage and the second power storage, electric power of a large capacity can be stored. Since the first power storage and the second power storage are attachable and removable, a user can disconnect the first power storage and the second power storage and can transport the first power storage or the second power storage. Therefore, mobility of the first power storage and the second power storage can be ensured.

In the power supply unit, electric power stored in the power storage of the power supply unit can be supplied to a power storage of another power supply unit. Therefore, since electric power obtained by the obtaining apparatus can be stored in the power storage and the power storage of another power supply unit, electric power of a large capacity can be stored. Since the power storage and the power storage of another power supply unit are attachable and removable, a user can disconnect the power storage and the power storage of another power supply unit and can transport the power storage or the power storage of another power supply unit. Therefore, mobility of the power storage can be ensured.

### BRIEF DESCRIPTION OF DRAWINGS

Fig. 1 is a diagram showing an exemplary configuration of a power supply system in the present embodiment.
Fig. 2 is a diagram showing an exemplary hardware configuration of a control device.
Fig. 3 is a diagram showing an exemplary configuration of a processing apparatus.
Fig. 4 is a diagram showing an exemplary configuration of a DCDC converter.
Fig. 5 shows an exemplary display screen of a display.
Fig. 6 is a diagram showing an exemplary configuration of a power supply system in a comparative example.

### DESCRIPTION OF EMBODIMENTS

An embodiment of the present invention will be described below with reference to the drawings. The same or corresponding apparatuses in the drawings below have the same reference characters allotted and description thereof will not be repeated.

### [Configuration of Power Supply System]

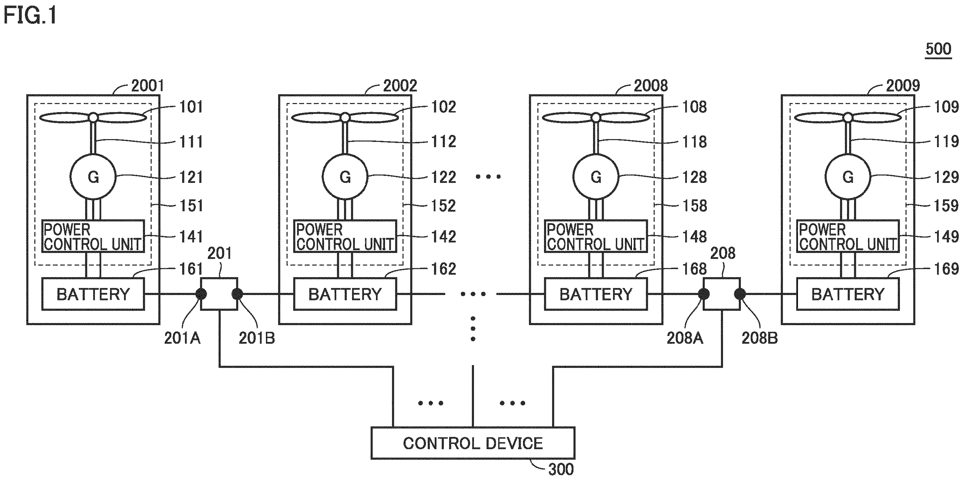

Fig. 1 is a diagram showing an exemplary configuration of a power supply system 500 in the present embodiment. Power supply system 500 includes N (N being an integer not smaller than two) power supply units, N-1 processing apparatuses, and a control device 300 that controls the N-1 processing apparatuses. An example in Fig. 1 shows nine power supply units 2001, 2002, ..., 2008, and 2009 (in other words, N = 9).

Power supply unit 2001 includes a power generation apparatus 151 and a battery 161. Power generation apparatus 151 includes a wind turbine 101, a main spindle 111, a generator 121, and a power control unit 141. Wind turbine 101 is rotated by kinetic energy of wind. As wind turbine 101 is rotated, main spindle 111 is rotated. Generator 121 converts rotation of main spindle 111 into electricity. Typically, generator 121 is a three-phase synchronous generator including a permanent magnet, and fastened to main spindle 111 by coupling or the like. A gear box may be provided between main spindle 111 and generator 121 as necessary. Power control unit 141 has electric power converted such that electric power generated by generator 121 can be supplied to battery 161 and stored therein. A load circuit may be provided in parallel to battery 161, and electric power can be supplied to the load in accordance with storage. In supply of electric power to the load, an inverter or the like can be provided as appropriate so that the battery can serve as an alternating-current (AC) power supply.

Other power supply units 2002 to 2009 also include power generation apparatuses 152 to 159 and batteries 162 to 169, respectively. Power generation apparatuses 152 to 159 include wind turbines 102 to 109, main spindles 112 to 119, generators 122 to 129, and power control units 142 to 149, respectively.

Two batteries corresponding to each other are removably connected to the processing apparatus. In the example in Fig. 1, battery 161 of power supply unit 2001 and battery 162 (the battery corresponding to battery 161) of power supply unit 2002 are removably connected to processing apparatus 201. Battery 161 is connected to processing apparatus 201 through a connection terminal 201A and battery 162 is connected to processing apparatus 201 through a connection terminal 201B. Battery 161 can supply electric power stored therein to battery 162 (the battery corresponding to battery 161). Processing apparatus 201 controls electric power to be supplied from battery 161 to the battery corresponding to battery 161. Under the control by processing apparatus 201, an average value of electric power supplied per unit time from battery 161 to battery 162 attains to a prescribed electric power value A1. Battery 162 can supply electric power stored therein to battery 161 (the battery corresponding to battery 162). Processing apparatus 201 controls electric power to be supplied from battery 162 to battery 161. Under the control by processing apparatus 201, an average value of electric power supplied per unit time from battery 162 to battery 161 attains to a prescribed electric power value A2.

In the example in Fig. 1, other batteries (for example, battery 168 of power supply unit 2008 and battery 169 of power supply unit 2009) are removably connected to processing apparatus 208. Battery 168 is connected to processing apparatus 208 through a connection terminal 208A and battery 169 is connected to processing apparatus 208 through a connection terminal 208B. Battery 168 can supply electric power stored therein to battery 169. Processing apparatus 201 controls electric power to be supplied from battery 168 to battery 169. Under the control by processing apparatus 208, an average value of electric power supplied per unit time from battery 168 to battery 169 attains to a prescribed electric power value A8. Battery 169 can supply electric power stored therein to battery 168. Processing apparatus 208 controls electric power to be supplied from battery 169 to battery 168. Under the control by processing apparatus 208, an average value of electric power supplied per unit time from battery 169 to battery 168 attains to a prescribed electric power value A9.

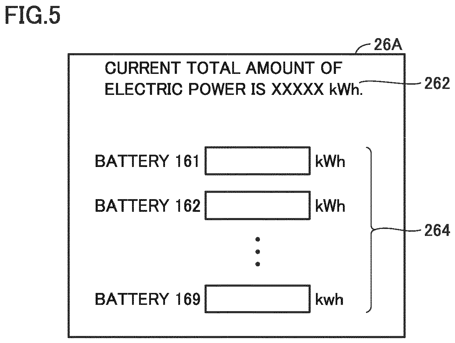

Prescribed electric power value A1, prescribed electric power value A2, prescribed electric power value A8, prescribed electric power value A9, and a prescribed electric power value between other batteries may be equal or different in value to or from one another. Control device 300 may change the prescribed electric power values, or the prescribed electric power values may be fixed. Control device 300 may control an amount of electric power to be stored in each battery by controlling each processing apparatus (see Fig. 5).

Power supply unit 2001 in the present embodiment corresponds to the "first power supply system" in the present disclosure. Power supply unit 2002 in the present disclosure corresponds to the "second power supply system" or "another power supply system" in the present disclosure. Power generation apparatus 151 in the present disclosure corresponds to the "first obtaining apparatus." Battery 161 in the present disclosure corresponds to the "first power storage." Power generation apparatus 152 in the present disclosure corresponds to the "second obtaining apparatus." Battery 162 in the present disclosure corresponds to the "second power storage."

Any other obtaining apparatus capable of obtaining electric power may be applicable as the power generation apparatus. For example, an apparatus that generates electric power with the use of a mill or an apparatus that generates electric power from solar rays may be applicable as the obtaining apparatus. A system power supply supplied from another power distribution network may be applicable as the obtaining apparatus.

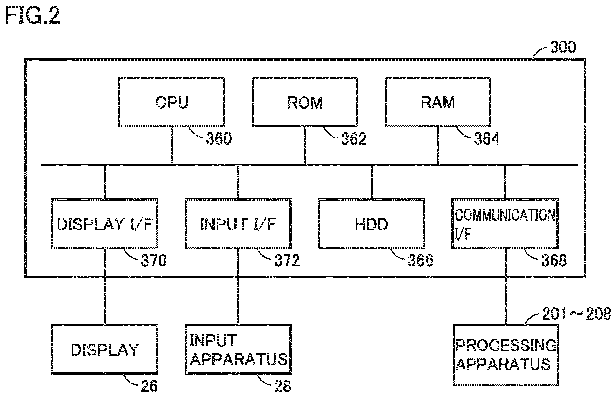

Fig. 2 is a diagram showing an exemplary hardware configuration of control device 300. Control device 300 includes, as its main constituent elements, a central processing unit (CPU) 360, a read only memory (ROM) 362, a random access memory (RAM) 364, a hard disk drive (HDD) 366, a communication interface (I/F) 368, a display I/F 370, and an input I/F 372. The constituent elements are connected to one another through a data bus.

Communication I/F 368 is an interface for communication with processing apparatuses 201 to 208. Display I/F 370 is an interface for communication with display 26. Input I/F 372 is an interface for communication with input apparatus 28. Fig. 1 does not show display 26 and input apparatus 28.

A program executed by CPU 360 is stored in ROM 362. Data generated by execution of a program by CPU 360 and data inputted through communication I/F 368 can temporarily be stored in RAM 364. RAM 364 can function as a temporary data memory used as a work area. HDD 366 is a non-volatile storage. Instead of HDD 366, a semiconductor storage such as a flash memory may be adopted.

A program stored in ROM 362 may be stored in a recording medium and distributed as a program product. Alternatively, a program may be provided by an information provider as a program product that can be downloaded through what is called the Internet. Control device 300 reads a program provided by a recording medium or through the Internet. Control device 300 has the read program stored in a prescribed storage area (for example, ROM 362). CPU 360 performs representation processing described above by executing the stored program.

A recording medium is not limited to a digital versatile disk read only memory (DVD-ROM), a compact disc read-only memory (CD-ROM), a flexible disk (FD), and a hard disk, and may be a medium that carries a program in a fixed manner such as a magnetic tape, a cassette tape, an optical disc (a magneto-optical (MO) disc/a mini disc (MD)/a digital versatile disc (DVD)), an optical card, and a semiconductor memory such as a mask ROM, an electronically programmable read-only memory (EPROM), an electronically erasable programmable read-only memory (EEPROM), and a flash ROM. A recording medium is a non-transitory medium from which a computer can read a program.

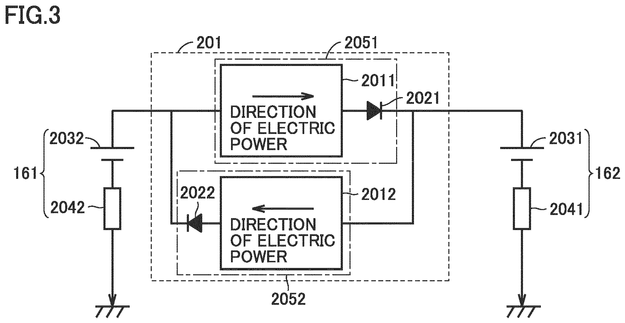

Fig. 3 is a diagram showing an exemplary configuration of processing apparatus 201. Processing apparatus 201 includes a first processing apparatus 2051 and a second processing apparatus 2052. First processing apparatus 2051 includes a direct-current (DC) DC converter 2011 and a diode 2021. Second processing apparatus 2052 includes a DC converter 2012 and a diode 2022. Battery 161 and battery 162 are connected to processing apparatus 201. Battery 161 includes an electromotive unit 2031 and an internal resistor 2041. Battery 162 includes an electromotive unit 2032 and an internal resistor 2042.

DCDC converter 2011 restricts electric power that flows from battery 161 to battery 162 such that an average value of electric power supplied per unit time from battery 161 to battery 162 attains to prescribed electric power value A1. Diode 2021 allows supply of electric power from DCDC converter 2011 to battery 162. Diode 2021 can prevent backflow of electric power from battery 162 to battery 161.

DCDC converter 2012 restricts electric power that flows from battery 161 to battery 162 such that an average value of electric power supplied per unit time from battery 162 to battery 161 attains to prescribed electric power value A2. Diode 2022 allows supply of electric power from DCDC converter 2012 to battery 161. Diode 2022 can prevent backflow of electric power from battery 161 to battery 162.

Other processing apparatuses (processing apparatus 208 and the like) are also configured as in Fig. 5.

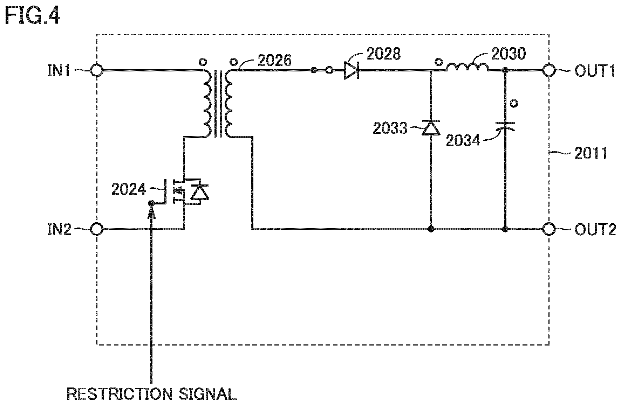

Fig. 4 is a diagram showing an exemplary configuration of DCDC converter 2011. An example in Fig. 4 shows a configuration of an isolated forward DCDC converter. DCDC converter 2011 shown in Fig. 4 includes a field effect transistor (FET) 2024, a diode 2028, a coil 2030, a diode 2033, a capacitor 2034, and a transformer 2026. DCDC converter 2011 includes an input terminal IN1 provided with an input voltage, an input terminal IN2 provided with a fixed voltage, an output terminal OUT1, and an output terminal OUT2.

A primary coil and a secondary coil are arranged in the center of transformer 2026. A core in common is provided between the primary coil and the secondary coil. FET 2024 controls connection between input terminal IN2 and one terminal of the primary coil of transformer 2026. Specifically, FET 2024 has a first terminal connected to input terminal IN2 and has a second terminal connected to the one terminal of the primary coil of transformer 2026. The other terminal of the primary coil of transformer 2026 is connected to input terminal IN1.

The secondary coil of transformer 2026 includes a pair of terminals, and one terminal of them is connected to a positive electrode of diode 2028 and the other terminal of them is connected to output terminal OUT2. A negative electrode of diode 2028 is connected to a negative electrode of diode 2033 and one terminal of coil 2030. Diode 2033 has a positive electrode connected to output terminal OUT2. Coil 2030 has the other terminal connected to output terminal OUT1. Capacitor 2034 includes a pair of electrodes, and one electrode of them is connected to output terminal OUT1 and the other of them is connected to output terminal OUT2.

A restriction signal outputted from control device 300 is inputted to FET 2024. This restriction signal is a signal for restricting a current and a voltage from battery 161 to battery 162. For example, this restriction signal is a signal to turn on FET 2024. While this restriction signal is inputted to FET 2024, FET 2024 is in an on state, and while this restriction signal is not inputted to FET 2024, FET 2024 is in an off state. Control device 300 controls a duty ratio at which FET 2024 is turned on, to thereby set the average value of electric power supplied per unit time from battery 161 to battery 162 to prescribed electric power value A1. Other DCDC converters are also configured as in Fig. 4.

Fig. 5 shows an exemplary display screen of display 26 (see Fig. 2) of control device 300. This screen is shown in a display area 26A of display 26. On this display screen, information 262 and information 264 are shown. Information 262 is information indicating a total amount of electric power stored in batteries 161 to 169. Information 264 is information for allowing a user (for example, a manager of power supply system 500) to input electric power to be stored in each of batteries 161 to 169. Information 264 includes an input area (a rectangular area in an example in Fig. 5) for input of an amount of electric power to be stored in each of batteries 161 to 169.

A user can recognize the total amount of electric power in batteries 161 to 169 by visually checking information 262. The user inputs the amount of electric power to be stored in each of batteries 161 to 169 into the input area corresponding to the battery with the use of input apparatus 28. For example, electric power in the amount inputted in the input area corresponding to battery 162 is stored in that battery 162. For example, electric power is supplied from battery 161 to battery 162 such that the amount of electric power in battery 162 attains to the inputted amount of electric power. In other words, display 26 and input apparatus 28 of control device 300 receive from the user, the input of the amount of electric power to be supplied from battery 161 to battery 162. Control device 300 controls each processing apparatus and battery 161 supplies electric power in the inputted amount to battery 162.

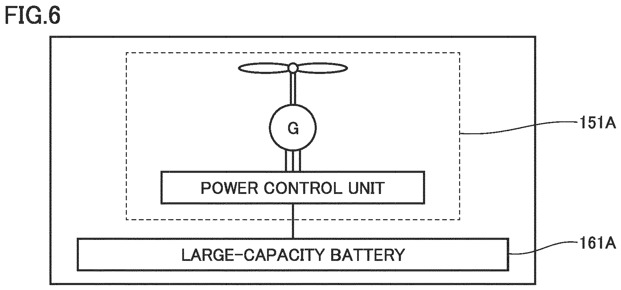

Fig. 6 is a diagram showing an exemplary configuration of a power supply system in a comparative example. In an example in Fig. 6, a power supply system including a power generation apparatus 151A that generates electric power and a battery 161A for electric power generated by power generation apparatus 151A. A user may increase a capacity of power storage in battery 161A of this power supply system. In this case, the size of battery 161A increases. The user or the like may desire removal of battery 161A where electric power is stored from the power supply system and transport of battery 161A. Transport of battery 161A large in size is difficult for the user. In other words, mobility of a charging apparatus may be compromised.

In contrast, in power supply system 500 in the present disclosure, electric power stored in battery 161 of power supply unit 2001 can be supplied to battery 162. Therefore, since electric power obtained by power generation apparatus 151 can be stored in battery 161 and battery 162, each battery (battery 161, battery 162, and the like) can be reduced in size and electric power of a large capacity can be stored. Electric power stored in battery 162 of power supply unit 2002 can be supplied to battery 161. Therefore, since electric power obtained by power generation apparatus 152 can be stored in battery 161 and battery 162, each battery (battery 161, battery 162, and the like) can be reduced in size and electric power of a large capacity can be stored. Since battery 161 and battery 162 are attachable and removable, the user can disconnect battery 161 and battery 162 reduced in size and transport battery 161 or battery 162 reduced in size. Therefore, mobility of battery 161 and battery 162 can be ensured. The user may disconnect and transport at least two batteries.

When an amount of power storage in battery 161 is extremely larger than an amount of power storage in battery 162, electric power may abruptly flow from battery 161 into battery 162 and consequently the battery may fail. When the amount of power storage in battery 162 is extremely larger than the amount of power storage in battery 161, electric power may abruptly flow from battery 162 into battery 161 and consequently the battery may fail. In the present embodiment, processing apparatus 201 is provided. Processing apparatus 201 controls an average amount of electric power supplied per unit time from battery 161 to battery 162 and controls an average amount of electric power supplied per unit time from battery 162 to battery 161. In other words, processing apparatus 201 can restrict the amount of electric power supplied from battery 161 to battery 162 and the amount of electric power supplied from battery 162 to battery 161. Therefore, abrupt flow of electric power from battery 162 into battery 161 and abrupt flow of electric power from battery 161 into battery 162 can be prevented. The average amount of electric power is expressed, for example, as a value calculated by dividing the "amount of electric power supplied from battery 161 to battery 162 during a prescribed period" by the prescribed period. The "average amount of electric power supplied per unit time" may be an "amount of electric power supplied per unit time." In other words, processing apparatus 201 may control the amount of electric power supplied per unit time from battery 161 to battery 162 and control the amount of electric power supplied per unit time from battery 162 to battery 161.

First processing apparatus 2051 is composed of DCDC converter 2011 and second processing apparatus 2052 is composed of DCDC converter 2012. Therefore, first processing apparatus 2051 and second processing apparatus 2052 are each composed of an existing apparatus.

The user can determine the amount of electric power to be stored in batteries 161 to 169 with the use of the display screen (see Fig. 5) shown on display 26. In other words, control device 300 receives input of the amount of electric power to be supplied from battery 161 to battery 162. Battery 161 supplies electric power in the amount inputted to control device 300 to battery 162. Battery 162 supplies electric power in the amount inputted to control device 300 to battery 161. The user thus can determine the amount of electric power to be stored in batteries 161 to 169, so that convenience of the user can be improved.

Power supply system 500 does not have to include control device 300 shown in Fig. 1. In this case, the prescribed electric power value described above (prescribed electric power value A1 or the like) is fixed.

Though an embodiment of the present invention has been described as above, the embodiment described above can also variously be modified. The scope of the present invention is not limited to the embodiment described above. The scope of the present invention is defined by the terms of the claims and is intended to include any modifications within the scope and meaning equivalent to the terms of the claims.

### REFERENCE SIGNS LIST

26A display area; 28 input apparatus; 101, 102, 109 wind turbine; 111, 112, 119 main spindle; 121, 122, 129 generator; 141, 142, 149 power control unit; 151, 152, 159 power generation apparatus; 161, 162, 168, 169 battery; 201, 208 processing apparatus; 201A, 201B, 208A, 208B connection terminal; 300 control device; 362 ROM; 364 RAM; 500 power supply system; 2001, 2002, 2008, 2009 power supply unit; 2011, 2012 converter; 2021, 2022, 2028, 2033 diode; 2026 transformer; 2030 coil; 2031, 2032 electromotive unit; 2034 capacitor; 2041, 2042 internal resistor; 2051 first processing apparatus; 2052 second processing apparatus

## Claims

1. A power supply system comprising:
a first power supply unit; and
a second power supply unit, wherein
the first power supply unit includes
a first obtaining apparatus that obtains electric power, and
a first power storage in which electric power obtained by the first obtaining apparatus is stored,
the second power supply unit includes
a second obtaining apparatus that obtains electric power, and
a second power storage where electric power obtained by the second obtaining apparatus is stored, and
the first power storage and the second power storage are removably connected such that electric power stored in the first power storage can be supplied to the second power storage.

2. The power supply system according to claim 1, further comprising a first processing apparatus that controls an amount of electric power to be supplied from the first power storage to the second power storage.

3. The power supply system according to claim 2, wherein
the first processing apparatus is composed of a DCDC converter.

4. The power supply system according to any one of claims 1 to 3, wherein
the first power storage and the second power storage are connected such that electric power stored in the second power storage can be supplied to the first power storage.

5. The power supply system according to claim 4, further comprising a second processing apparatus that controls an amount of electric power to be supplied from the second power storage to the first power storage.

6. The power supply system according to claim 5, wherein
the second processing apparatus is composed of a DCDC converter.

7. The power supply system according to any one of claims 1 to 6, further comprising a control device that receives input of an amount of electric power to be supplied from the first power storage to the second power storage, wherein
the first power storage supplies to the second power storage, electric power in the amount inputted to the control device.

8. A power supply unit comprising:
an obtaining apparatus that obtains electric power; and
a power storage in which electric power obtained by the obtaining apparatus is stored, wherein
the power storage and a power storage of another power supply unit are removably connected such that electric power stored in the power storage can be supplied to the power storage of another power supply unit.
